# EUROPÄISCHE PATENTANMELDUNG

(11) **EP 2 418 635 A2**
(43) Veröffentlichungstag der Anmeldung: **15.02.2012**
(21) Anmeldenummer: 11006402.9
(22) Anmeldetag: 04.08.2011
(51) Int. Cl.: G09B 9/00

(54) **Verfahren und Vorrichtung zur Schulung an insbesondere gepanzerten militärischen Fahrzeugen**

(30) Priorität: 13.08.2010 DE 102010034384
(71) Anmelder: Diehl BGT Defence GmbH & Co.KG, 88662 Überlingen (DE)
(72) Erfinder: Ebersperger, Walter, 91056 Erlangen (DE); Klapper, Peter, 91560 Heilsbronn (DE); Menges, Michael, 90482 Nürnberg (DE)
(74) Vertreter: Diehl Patentabteilung

(57) **Zusammenfassung**

Eine simulationsgestützte, ebenenübergreifende und mobile Schulung an einem gepanzerten Fahrzeug (11) als dem operationellen Landkampfsystem selbst lässt sich dadurch flexibel und kostengünstig realisieren, dass alle für die Bedienung des Fahrzeuges (11) notwendigen Bedienelemente (15), gegebenenfalls über elektromechanische Wandler (16), im Fahrzeug (11) abgegriffen und deren Aktionssignale in einer Anschlussbox (14) so umgesetzt werden, dass ein extern betriebener Simulationsrechner (12) die Bedienertätigkeit erfassen und in einem Zustandsmodell abbilden kann. Dementsprechend durch eine Simulationssoftware (13) generierte Bilder der Umwelt (18) werden dem Personal im Fahrzeug (11) durch dessen Sichtmittel (19), insbesondere durch das Zielfernrohr, über eine mit angepasster Strahlengeometrie adaptierte Sichtmittelbox (20) eingespielt. Die flexible Funktionalität der Anschlussbox (14), in der die verschiedenen im Fahrzeug (11) abgenommen Signalarten zur Weitergabe an den Simulationsrechner (12) vereinheitlicht werden, ergibt eine Adaptierbarkeit an unterschiedliche Landkampfsysteme. Damit ist eine Vernetzung der Systeme zur Ausbildung in gemischten Verbänden (z. B. Kampf- und Schützenpanzer) über einen Zusammenschluss mehrerer Simulationsrechner (12-12') möglich.

## Beschreibung

Die Erfindung betrifft die Maßnahmen gemäß den Oberbegriffen der beiden Hauptansprüche, wie sie aus der EP 0 947 797 B1 zum Reduzieren des Aufwandes bekannt sind, der für die eingeführten ortsfesten Schulungssimulatoren anfällt. Diese Simulatoren stehen regelmäßig gerade dort nicht zur Verfügung, wo nach dem Einsatzplan eine Schulung des Personals kurzfristig möglich oder gar nötig wäre; und die apparative Ausstattung solcher stationärer Schulungssimulatoren ist aufwandsbedingt nur einem bestimmten Fahrzeug nachempfunden oder sogar neutral gehalten, was beides etwa einer zielgerichteten Eilausbildung des Personals zum Bedienen des tatsächlich gerade verfügbaren Fahrzeugparks abträglich ist. Dabei ist nach jenem Patent vorgesehen, zu Schulungszwecken vorübergehend an das Bussystem eines gerade verfügbaren, insbesondere gepanzerten Fahrzeuges einen externen Simulationsrechner anzuschließen, der sich dadurch auf diesen spezifischen Fahrzeugtyp konfiguriert und unter Blockade dessen Antriebsaggregate (wie des Fahrzeuggetriebes und gegebenenfalls einer Waffenrichtanlage) sowie unter Überbrücken der an den Bus angeschlossenen bildgebenden Sensoren über deren Bildschirme simulierte Umfeldszenarien abspielt. Die daraufhin vom Personal an Bord des Fahrzeuges ausgeübten Steuerungsaktionen, die für spätere Auswertungen abgespeichert werden, lösen eine Simulation typischer Fahrzeugreaktionen aus, die visuell und akustisch dem Bedienungspersonal im Fahrzeug (etwa einer Kampfpanzerbesatzung) dargeboten werden.

So bestechend dieses Konzept eines flexiblen und realistischen "embedded training" ist, es leidet doch unter dem Nachteil, dass auf absehbare Zeit verfügbare gepanzerte Fahrzeuge, für deren Einsatz die Schulung von existenzieller Bedeutung ist, noch gar nicht den Vetronic-Level eines komplexen Bussystemes aufweisen, über den der externe Simulationsrechner in das Geschehen an Bord eingreifen könnte.

In Erkenntnis solcher Gegebenheiten liegt vorliegender Erfindung die technische Problemstellung zugrunde, ein Verfahren gattungsgemäßer Art für Einsatz auch in den vorhandenen Fahrzeugpark auszulegen.

Diese Aufgabe ist erfindungsgemäß durch die in den Hauptansprüchen angegebenen wesentlichen Merkmale gelöst. Danach wird zwischen dem Fahrzeug und dem Simulationsrechner eine hier so genannte Anschlussbox betrieben, die einfach an das Fahrzeug angehängt werden kann. Sie dient dazu, am Fahrzeug abzugreifende Bedienungs- oder Steuerungsaktionen in Simulationsrechner-Eingangssignale umzusetzen und darauf beruhende Simulationsreaktionen aus dem Simulationsrechner zu akustischer und visueller Darbietung an das Personal im Fahrzeug zu übermitteln.

Zum Erfassen mechanischer Steuerungsaktionen wie des Verdrehens eines Richtrades oder des Durchtretens eines Pedales werden im Fahrzeug, für die Dauer seines Einsatzes als Schulungssimulator, z. B. potentiometrische Winkel- und Wegaufnehmer bei den interessierenden Bedienelementen angebracht, zu elektrischem Anschluss an den Simulationsrechner über die Anschlussbox. Montage und Demontage solcher elektromechanischen Wandler nehmen nur unkritisch kurze Zeitspannen in Anspruch, insbesondere wenn für die zu Schulungszwecken typischerweise heranzuziehenden Fahrzeugtypen angepasste Montage-Bausätze mit den Wandlern und mit kodierten Anschlusskabelsätzen vorrätig gehalten werden. Elektrische Bedienelemente wie Schalter, aber auch optische und akustische Signalgeber an Bord des Fahrzeuges, sind an dessem Schaltkasten für den Schulungseinsatz direkt zugänglich.

Spezifisch der visuellen Darbietung von mittels der Simulationssoftware generierten Umfeldszenarien dienen hier so genannten Sichtmittelboxen. Mittels derer werden vom Simulationsrechner angesteuerte Monitore über Anpassoptiken vor den fahrzeugeigenen Sichtmitteln wie insbesondere Zielfernrohren adaptiert, um keine brennweitenabhängige Projektion vor dem Fahrzeug vornehmen zu müssen.

Der erwähnte Simulationsrechner dient nicht nur dem Betrieb des eigentlichen Umfeldsimulations-Programmes, sondern auch etwa der Ablaufkoordinierung eines Schulungszyklus und gegebenenfalls der Kooperation mit anderen Schulungs-Fahrzeugen, weshalb im Feldeinsatz vorzugsweise mit mehreren, jeweils in Zuordnung zu bestimmten Funktionen optimierten Rechnern gearbeitet wird. In ihrer Gesamtheit werden sie hier als der Simulationsrechner bezeichnet.

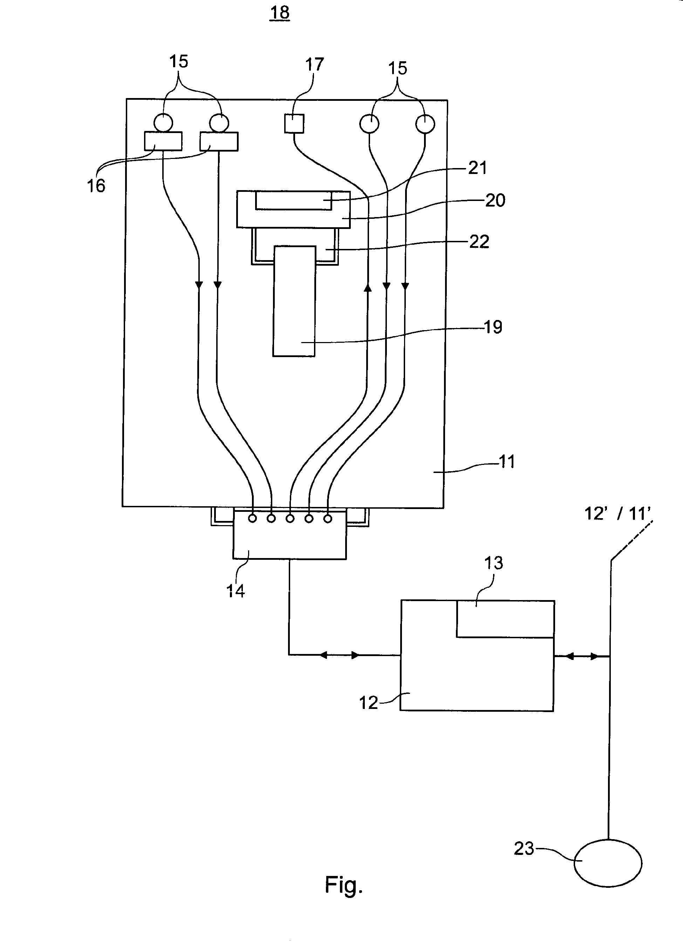

Zusätzliche Weiterbildungen und weitere Abwandlungen der erfindungsgemäßen Lösung ergeben sich aus den weiteren Ansprüchen und, auch hinsichtlich deren Vorteilen, aus nachstehender Beschreibung eines in der Zeichnung unmaßstäblich skizzierten bevorzugten Realisierungsbeispieles zur Erfindung.

Die einzige Figur der Zeichnung veranschaulicht als Funktionsskizze symbolisch ein Fahrzeug 11, etwa einen Kampfpanzer oder dergleichen Landkampfsystem, mit dessen Bedienung das Personal vertraut gemacht werden soll. Dazu dient das Fahrzeug 11 selbst, bei zur Sicherheit abgeschalteten Antriebsaggregaten, als sein Schulungssimulator in einer virtuellen Umgebung. Die wird in einem außerhalb des Fahrzeuges 11 betriebenen Simulationsrechner 12 mittels einer in sich abgeschlossenen, kommerziell verfügbaren Simulationssoftware 13 generiert. Der Kommunikation zwischen Fahrzeug 11 und Simulationsrechner 12 dient eine Anschlussbox 14, die für die Schulung z. B. wie skizziert einfach an das Fahrzeug 11 angehängt wird.

Alle für die Steuerung des Fahrzeuges 11 notwendigen Bedienelemente 15 werden über mechanisch-elektrische Wandler 16 oder unmittelbar elektrisch abgegriffen. Deren Steuerungsinformationen werden in der funktional auf das Fahrzeug 11 zugeschnittenen Anschlussbox 14 so umgesetzt, dass der daran angeschlossene externe Simulationsrechner 12 die aktuellen Bedienungsaktivitäten an Bord erfassen und in einem Zustandsmodell abbilden kann. Die auf die Bedienungsaktivitäten zu erwartenden Reaktionen von Bediengeräten 17 werden vom Simulationsrechner 12 über die Anschlussbox 14 aktiviert; und Reaktionen des Fahrzeuges 11 werden über eine Scriptschnittstelle an die autonom betriebene Simulationssoftware 13 im Simulationsrechner 12 übergeben, welche das physikalische Verhalten des Fahrzeuges 11 - und gegebenenfalls auch eine auf dieser Systemreaktion basierende Folgereaktion in der Umwelt 18 - abbildet. Die dabei durch die Simulationssoftware 13 generierten Bilderfolgen werden dem Personal (nicht dargestellt) an Bord des Fahrzeuges 11 durch dessen Sichtmittel 19 wie insbesondere ein Zielfernrohr eingespielt.

Das geschieht, indem vor dem optischen Eingang des jeweiligen Sichtmittels 19 eine Sichtmittelbox 20 adaptiert wird, welche einen Monitor 21 und einen auf den Strahlengang des Sichtmittels 19 zugeschnittenen optischen Adapter 22 beinhaltet.

Der Simulationsrechner 12 kann unter dem Kommando eines externen Übungsleiters 23 stehen, bei dem der Ablauf des aktuellen Schulungsprogrammes abgespeichert werden kann.

Zusätzlich ist eine Vernetzung mehrerer solcher auf Einsatz von real vorhandenen Fahrzeugen 11, 11' basierenden Schulungssysteme möglich, wodurch eine Ausbildung in gemischten Verbänden von z. B. Kampf- und Schützenpanzern eröffnet ist, in der Zeichnung symbolisch veranschaulicht durch (materielle oder immaterielle) Kommunikation mit einem weiteren Simulationsrechner 12'. Das Training ist dadurch auf allen taktischen Ebenen bis hin zur Kompanie möglich, sowohl innerhalb der eigenen Truppengattung als auch truppengattungsübergreifend.

Im Interesse variabler Vernetzungsmöglichkeiten ist die Anschlussbox 14 dafür ausgelegt, die aktuellen spezifischen Schnittstellenformate der zu adaptierenden Landkampfsysteme (Fahrzeuge 11) auf ein standardisiertes Schnittstellenformat abzubilden und dadurch den Adaptionsaufwand auf höhere Schichten zu minimieren. Bei Änderungen hinsichtlich des Fahrzeugsystems verändert sich die Schnittstelle nicht, nur gegebenenfalls das Format des über diese Schnittstelle ausgetauschten Datensatzes. Über die Anschlussbox 14 werden so alle Signale zum und vom jeweiligen Fahrzeug 11 in ein einheitliches Format gewandelt. Mit dem Simulationsrechner 12 und zwischen denen wird vorzugsweise über einen seriellen Bus kommuniziert, etwa über den standardisierten CAN-Bus.

Eine simulationsgestützte, ebenenübergreifende und kurzfristige Schulung an einem gepanzerten Fahrzeug 11 als dem operationellen Landkampfsystem selbst lässt sich also erfindungsgemäß dadurch flexibel und kostengünstig realisieren, dass die Steuerungsaktionen an allen für die Bedienung des Fahrzeuges 11 notwendigen Bedienelementen 15, gegebenenfalls über elektromechanische Wandler 16, im Fahrzeug 11 abgegriffen und deren Signale in einer für die Schulung angebrachten Anschlussbox 14 so umgesetzt werden, dass ein extern betriebener Simulationsrechner 12 die Bedienertätigkeit in einem Zustandsmodell abbildet. Dem entsprechende Reaktionen des Fahrzeuges 11 werden vom Simulationsrechner 12 generiert und über die Anschlussbox 14 in das Fahrzeug 11 zurückgeliefert. Die Anschlussbox 14 dient dabei als Schnittstelle zum Umsetzen der am Fahrzeug 11 abzugreifenden Steuerungsaktionen in Simulationsrechner-Eingangssignale und zum Rückliefern von Fahrzeugreaktionen aus dem Simulationsrechner 12 an das Fahrzeug 11. Durch die Simulationssoftware 13 generierte Bilder der Umwelt 18 werden dem Personal im Fahrzeug 11 durch dessen Sichtmittel 19, insbesondere durch das Zielfernrohr, über eine mit angepasster Strahlengeometrie adaptierte Sichtmittelbox 20 eingespielt. Die flexible Funktionalität der Anschlussbox 14, in der die verschiedenen im Fahrzeug 11 abgenommen Signalarten zur Weitergabe an den Simulationsrechner 12 vereinheitlicht werden, ergibt eine Adaptierbarkeit an unterschiedliche Landkampfsysteme, also Fahrzeuge 11. Damit ist eine Vernetzung der Systeme zur Ausbildung in gemischten Verbänden mit z. B. Kampf- und Schützenpanzern über einen Zusammenschluss mehrerer Simulationsrechner 12-12' möglich.

## Patentansprüche

1. Verfahren zur Schulung von Personal an insbesondere gepanzerten militärischen Fahrzeugen (11) durch Darbieten simulierter Umfeldszenarien im Fahrzeug (11) und Erfassen der daraufhin im Fahrzeug (11) vom Personal ausgeübten Aktionen sowie Simulation entsprechender Fahrzeug- Reaktionen in einem für die Schulung an das Fahrzeug (11) angeschlossenen Simulationsrechner (12), **dadurch gekennzeichnet,**
**dass** das Fahrzeug (11) mit einer Anschlussbox (14) als Schnittstelle zum Umsetzen von am Fahrzeug (11) abzugreifenden Steuerungsaktionen in Simulationsrechner-Eingangssignale und zum Rückliefern von Fahrzeugreaktionen aus dem Simulationsrechner (12) an das Fahrzeug (11), sowie mit zumindest einer Sichtmittelbox (20), die zum visuellen Darbieten simulierter Umfeldszenarien vor einem Sichtmittel (19) des Fahrzeuges (11) adaptiert wird, versehen wird.

2. Verfahren nach Anspruch 1,
wobei die Sichtmittelbox (20) mit einem Monitor (21) ausgestattet wird, und dass zwischen diesem und dem Sichtmittel (19) ein optischer Strahlengang-Adapter (22) betrieben wird.

3. Verfahren nach Anspruch 1 oder 2,
wobei rotatorische und lineare Bewegungen von Bedienelementen (15) elektromechanisch, insbesondere potentiometrisch erfasst und über die Anschlussbox (14) an den Simulationsrechner (12) übermittelt werden.

4. Verfahren nach einem der vorangehenden Ansprüche,
wobei in der Anschlussbox (14) fahrzeugspezifische Signale zur Übermittlung über einen Standard-Bus an den Simulationsrechner (12) umgesetzt werden.

5. Verfahren nach Anspruch 4,
wobei Simulationsrechner (12, 12') unterschiedlicher Fahrzeuge (11, 11') über den Standard-Bus miteinander kommunizieren.

6. Verfahren nach einem der vorangehenden Ansprüche,
wobei im Simulationsrechner (12) ein autonomes Simulationsprogramm (13) betrieben wird.

7. Vorrichtung zum Ausüben eines der Verfahren nach einem der vorangehenden Ansprüche,
**gekennzeichnet durch** eine Anschlussbox (14), die während der Schulung einerseits zur Aufnahme von Bedienungssignalen über elektromechanische Wandler (16) oder direkt an Bedienelemente (15) und andererseits an einen Simulationsrechner (12) anschließbar ist.

8. Vorrichtung nach Anspruch 7,
wobei die Anschlussbox (14) über einen seriellen Standard-Bus an den Simulationsrechner (12) angeschlossen ist.

9. Vorrichtung nach Anspruch 7 oder 8,
wobei die Simulationsrechner (12, 12') unterschiedlicher Fahrzeuge (11, 11') über Busse miteinander kommunizieren.

10. Vorrichtung nach einem der Ansprüche 7 bis 9,
wobei an den Simulationsrechner (12) über die Anschlussbox (14) Bediengeräte (17) im Fahrzeug (11) und, über einen optischen Strahlengang-Adapter (22), eine Sichtmittelbox (20) vor einem fahrzeugeigenen Sichtmittel (19) anschließbar sind.
